# EUROPEAN PATENT APPLICATION

(11) **EP 0 523 986 A1**
(43) Date of publication of application: **20.01.1993**
(21) Application number: 92306494.3
(22) Date of filing: 15.07.1992
(51) Int. Cl.: B29D 31/00, B31D 5/00, B29C 53/22, B31F 1/20, B01D 29/00, B01D 29/01

(54) **Apparatus for manufacturing a filter element**

(30) Priority: 17.07.1991 ZA 915589
(71) Applicant: UNIVERSAL FILTRATION (PROPRIETARY) LIMITED, Cape Town, Cape Province (ZA)
(72) Inventor: Lambourn , Paul, Albermarle Germiston,Transvaal Province (ZA)
(74) Representative: Richards, David John

(57) **Abstract**

An apparatus (10) for manufacturing a filter element includes a first mould element (12) having a plurality of spaced parallel rib (14) defined thereon. A second mould element (18) is arranged in spaced alignment relative to the first mould element (12), the second mould element (18) carrying a plurality of spaced parallel ribs (22) displaceably thereon. A displacement means (24) which includes a cam arrangement (28) is mounted on the second mould element (18) for displacing the ribs (22) of the second mould element (18) sequentially towards the first mould element (12) such that, in use, when the ribs (22) of the second mould element (18) are displaced into meshing engagement with the ribs (14) of the first mould element (12), pleats or folds are formed in a sequential fashion in a batt of filter material arranged between the mould elements (12,18). The cam arrangement (28) comprises a plurality of cam members (32), a cam member (32) being associated with each rib (22) of the second mould element (18) and the cam members (32) having consecutively greater dwell angles to facilitate the sequential formation of the pleats or folds in the batt.

## Description

**THIS INVENTION** relates to the manufacture of filter elements. More particularly, the invention relates to an apparatus for manufacturing a filter element.

According to the invention, there is provided an apparatus for manufacturing a filter element, the apparatus including
a first mould element having a plurality of spaced parallel ribs defined thereon;
a second mould element which is arranged in spaced alignment relative to the first mould element, the second mould element carrying a plurality of spaced parallel ribs displaceably thereon;
a displacement means which includes a cam arrangement mounted on the second mould element for displacing the ribs of the second mould element sequentially towards the first mould element such that, in use, when the ribs of the second mould element are displaced into meshing engagement with the ribs of the first mould element, pleats or folds are formed in a sequential fashion in a batt of filter material arranged between the mould elements; and
the cam arrangement comprising a plurality of cam members, a cam member being associated with each rib of the second mould element and the cam members having consecutively greater dwell angles to facilitate the sequential formation of the pleats or folds in the batt.

To obtain the required filtering capabilities of the filter element, one surface of the batt of filter material must be heated. The heating of the batt causes fusing of fibres constituting the batt to obtain the desired pore size. Heating of the batt also imparts structural rigidity to the filter element so formed.

Thus, the apparatus may include a heating means for heating the batt of filter material to cause fusing of fibres of the batt.

The first mould element may comprise a platen-like member with the ribs formed thereon. Then, conveniently, the platen-like member may carry the heating means.

The heating means may comprise a plurality of heater elements each of which is received in a passage defined in the platen-like member of the first mould element.

Each cam member of the cam arrangement may have a follower associated therewith, the cam member bearing against one end of the follower with an opposed end of the follower bearing against its associated rib of the second mould element. Each follower may be in the form of a pin which is displaceably carried by the second mould element.

The second mould element may be mounted above the first mould element and may be movable towards and away from the first mould element.

The second mould element may have a peripheral wall portion which abuts against the first mould element, in use, prior to displacement of the ribs of the second mould element to grip the batt and to effect stretching of the batt over the ribs of the first mould element to facilitate pre-heating of the batt.

The apparatus may further include an ejector mechanism for ejecting a formed filter element from the first mould element. The ejector mechanism may comprise a plurality of ejector rods arranged in the first mould element. The ejector rods may be arranged in groups in the first mould element, the ejector rods being movable towards and away from the second mould element.

The apparatus is intended particularly for use in the manufacture of filter elements having annular pleats or folds.

Thus, the ribs of the first mould element may be annular and may have consecutively increasing diameters. The ribs of the second mould element may then be correspondingly annular to mesh with the ribs of the first mould element, the ribs of the second mould element being defined by rings of consecutively increasing diameter.

In this embodiment, the cam arrangement may comprise two assemblies of cam members, the assemblies being mounted on opposed sides of a centre line of the first mould element and the second mould element with the assemblies being mirror images of each other.

The innermost cam member of each assembly may have the longest dwell angle with the outermost cam member having the shortest dwell angle.

It will be appreciated that, in use, rotation of the cam members causes the rings to be extended relative to the second mould element to mesh with the ribs of the first mould element. Further, it will be appreciated that due to the configuration of the cam assemblies, the innermost ring of the second mould element meshes with the innermost rib of the first mould element initially followed by the other rings meshing with the ribs in a radially outward direction, sequentially.

The invention, accordingly, also extends to an apparatus for manufacturing a filter element, the apparatus including
a first mould element having a plurality of annular ribs of consecutively increasing diameter defined thereon;
a second mould element which is arranged in spaced alignment relative to the first mould element, the second mould element carrying a plurality of rings of consecutively increasing diameter displaceably thereon; and
a displacement means mounted on the second mould element for displacing the rings sequentially towards the first mould element such that, when the rings mesh with corresponding ribs of the first mould element, annular pleats or folds are formed in a sequential fashion in a batt of filter material arranged between the mould elements.

The invention is now described by way of example with reference to the accompanying diagrammatic drawings.

In the drawings,
Figure 1 shows a schematic sectional side view of an apparatus, in accordance with the invention, for manufacturing a filter element;
Figure 2 shows a plan view of a first mould element of the apparatus;
Figure 3 shows a schematic end view of a displacement means of the apparatus; and
Figures 4A to 4J show end views of cam members of the displacement means.

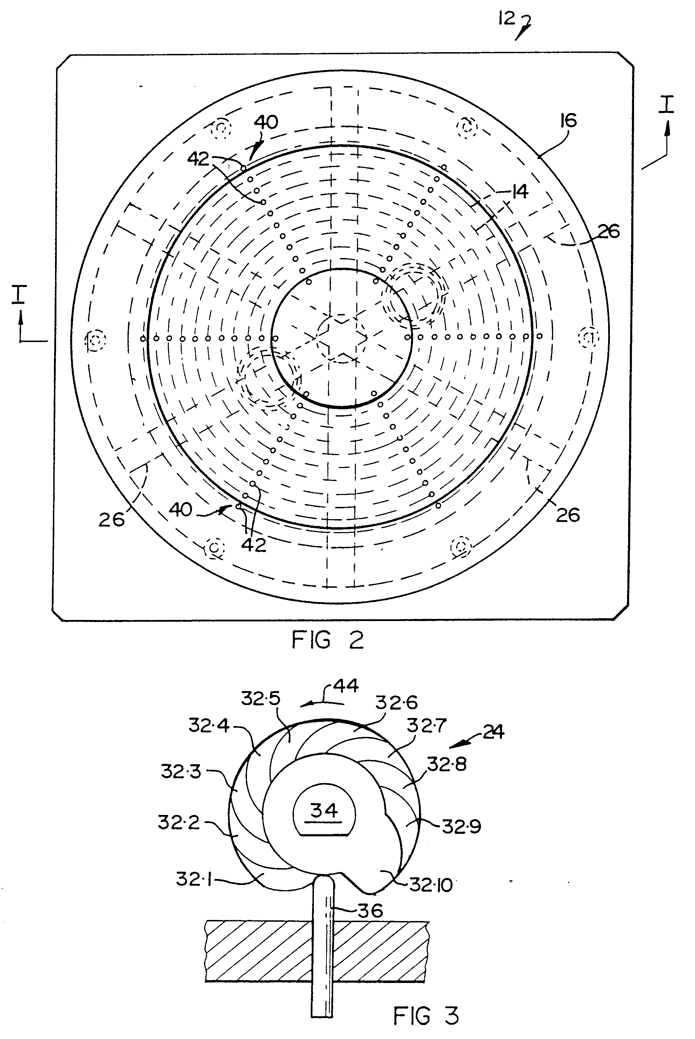

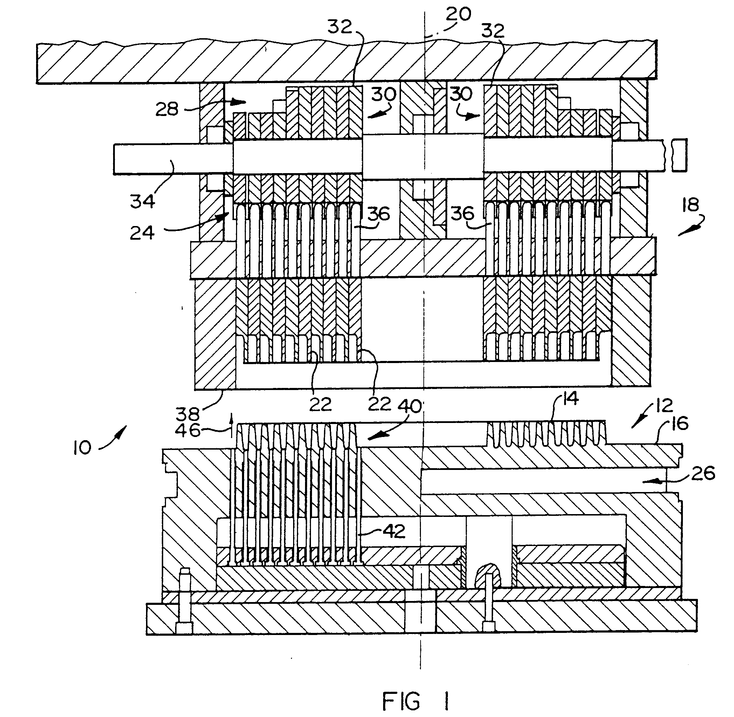

Referring to the drawings, an apparatus, in accordance with the invention, for manufacturing a filter element is illustrated and is designated generally by the reference numeral 10. The apparatus 10 comprises a first mould element 12 having a plurality of spaced, annular, ribs 14 of consecutively increasing diameter thereon. The ribs 14 are formed integrally with a platen-like base member 16. It is to be noted that the section of the first mould element 12 is taken along line I-I in Figure 2 of the drawings.

The apparatus 10 further includes a second mould element 18 arranged above the first mould element 12. The second mould element is axially displaceable along axis 20 towards and away from the first mould element 12.

The second mould element 18 displaceably supports a plurality of spaced annular ribs defined by rings 22. The rings 22 are complementary to the ribs 14 of the first mould element 12 and mesh therewith to form a filter element as will be described in greater detail below.

A displacement means 24 is mounted on the second mould element 18 for displacing the rings 22 individually and independently of one another towards the first mould element 12 such that, when the rings 22 of the second mould element are displaced by the displacement means 24 into meshing engagement with the ribs 14 of the first mould element 12, pleats or folds are formed in a batt of filter material (not shown) arranged between the mould elements 12 and 18 in a sequential fashion.

The first mould element 12 has a plurality of radially extending passages 26 defined therein. A heating means (not shown) is received in each passage 26 for heating the platen-like member 16 and the ribs 14 to cause fusing of fibres of the batt of filter material to obtain the required filtering capabilities of the filter element being formed.

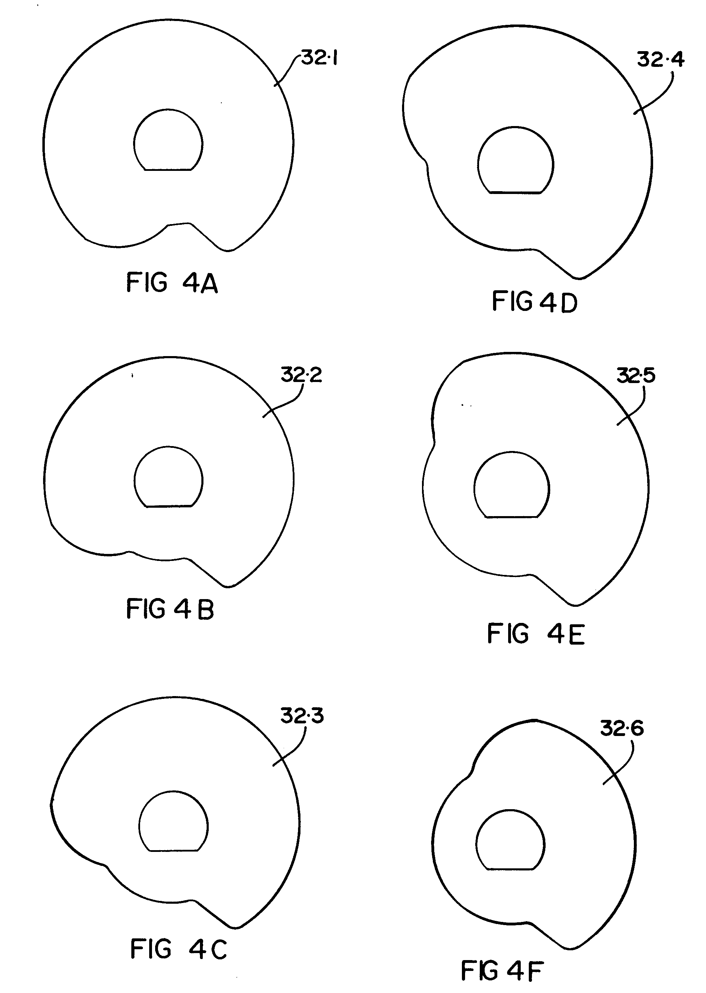

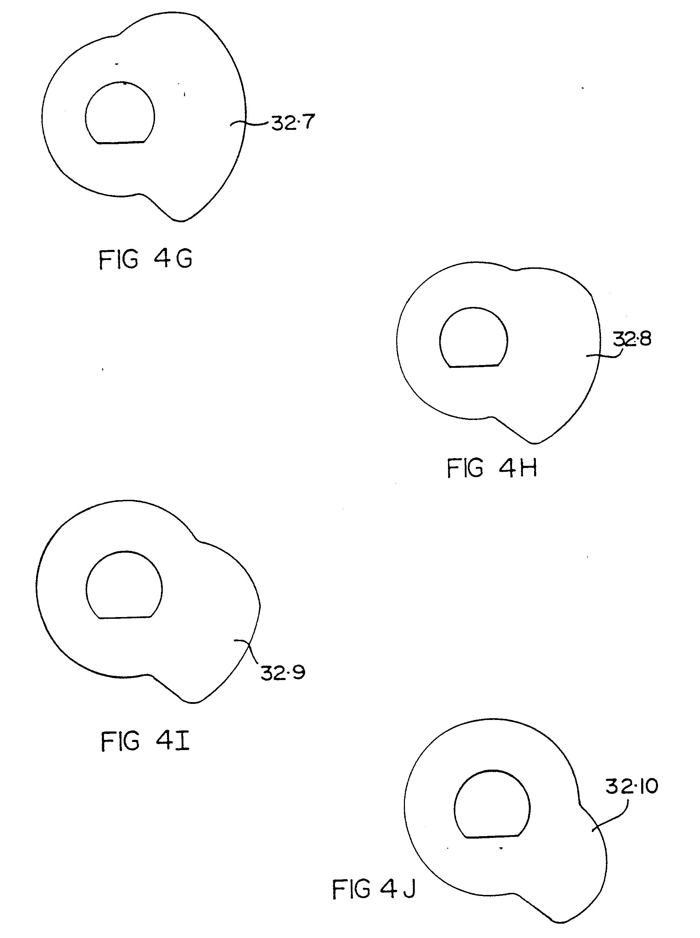

As described above, the rings 22 are movable independently of one another. Thus, the displacement means 24 comprises a cam arrangement 28. The cam arrangement 28 comprises two cam assemblies 30. The cam assemblies 30 are mirror images of each other and are arranged on opposed sides of the axis 20 such that uniform displacement of the rings 22 occurs. Each cam assembly 30 comprises a number of cam members or cams 32 which are arranged side-by-side. Profiles of the cams 32, numbered from 32.1 to 32.10, are shown in Figures 4A to 4J of the drawings. It is to be noted that cam 32.1 which is the innermost cam has the longest dwell angle whereas the cam 32.10, which is the outermost cam of the assembly 30, has the shortest dwell angle.

Each cam assembly 30 is mounted on a keyed shaft 34 which is rotatably supported in the second mould element 18.

Each cam 32 has a follower in the form of a pin 36 associated therewith. A first end of the pin 36 is impinged upon by its associated cam 32 and an opposed end of the pin 36 bears against its associated ring 22. The displacement means 24 has a suitable urging means (not shown) associated therewith for urging the rings 22 into their retracted positions after formation of the filter element.

The second mould element 18 has a peripheral wall portion 38 which, in use, abuts against the platen-like member 16 of the first mould element 12 prior to extension of the rings 22 relative to the second mould element 18 to grip the batt of filter material and to cause stretching of the batt over the ribs 14 to effect pre-heating of the batt.

The first mould element 12 has an ejector mechanism 40 for disengaging the filter element from the ribs 14 of the first mould element 12 after the formation of the filter element. The ejector mechanism 40 comprises a plurality of radially spaced rods 42 arranged in circumferentially spaced groups in the first mould element 12.

In use, a lofted batt of a fibrous material from which it is desired to form the filter element is arranged between the first mould element 12 and the second mould element 18. It will be appreciated that the second mould element 18 is in a raised position relative to the first mould element 12.

The second mould element 18 is lowered towards the first mould element 12 until the peripheral wall portion 38 of the second mould element 18 abuts against the platen-like member 16 of the first mould element 12 securely to grip the batt of filter material therebetween and to stretch the filter material over the ribs 14 to pre-heat the batt.

The displacement mechanism is rotated in the direction of arrow 44 (Figure 3). Thus, the first cam 32.1 of each assembly 30 impinges on its follower 36 urging the innermost ring 22 into meshing engagement with the innermost rib 14. As the displacement mechanism is rotated, the cams 32.2 then urge the second ring into meshing engagement with the second rib 14 and so on, until all the rings 22 have sequentially been brought into meshing engagement with the ribs 14. The apparatus 10 is retained in this position for a predetermined period of time until the filter material has been heated for a sufficient period of time to cause the required fusing of fibres of the filter material to obtain the required pore size of the filter material.

After the predetermined period of time, the displacement means 24 is rotated further in the direction of the arrow 44 to cause the pins 36 to be released and allowing the rings 22 to be retracted into the second mould element 18. The second mould element 18 is raised relative to the first mould element 12 and the ejector mechanism 40 is operated to urge the rods 42 through the platen-like member 16 in the direction of the arrow 46 to disengage the filter element from the ribs 14. .

The filter element is then removed from the apparatus 10 for further processing and finishing. The further processing comprises merely neatening the periphery of the filter element and the mounting of the filter element, for example, in a frame.

Thus it is an advantage of the invention that an apparatus 10 is provided which carries out the process of both compressing and forming pleats and folds in a filter element as well as heating of the filter element, effectively in a single operation. This is particulary advantageous in the case of forming filter elements having annular pleats or folds where heretofore, as far as the Applicant is aware, at least two separate machines were required, one for forming arcuate pleats or folds in a fan-shaped batt and another for forming the pleated fan-shaped batt into an annular form. Hence, it will be appreciated that the apparatus 10, in accordance with the invention, is particularly cost effective in the manufacture of filter elements having annular pleats or folds. However, those skilled in the art will also readily appreciate that the apparatus 10 is equally useful in the manufacture of filter elements having other arrangements of pleats or folds, for example, linear, parallel pleats or folds.

Finally, the first mould element 12 and the rings 22 of the second mould element 18 may be removably supported to enable them to be replaced by other mould elements and complementary rib defining structures of other shapes. This further improves the versatility of the apparatus 10.

## Claims

1. An apparatus for manufacturing a filter element, the apparatus including
a first mould element having a plurality of spaced parallel ribs defined thereon;
a second mould element which is arranged in spaced alignment relative to the first mould element, the second mould element carrying a plurality of spaced parallel ribs displaceably thereon;
a displacement means which includes a cam arrangement mounted on the second mould element for displacing the ribs of the second mould element sequentially towards the first mould element such that, in use, when the ribs of the second mould element are displaced into meshing engagement with the ribs of the first mould element, pleats or folds are formed in a sequential fashion in a batt of filter material arranged between the mould elements; and
the cam arrangement comprising a plurality of cam members, a cam member being associated with each rib of the second mould element and the cam members having consecutively greater dwell angles to facilitate the sequential formation of the pleats or folds in the batt.

2. The apparatus as claimed in Claim 1, which includes a heating means for heating the batt of filter material to cause fusing of fibres of the batt.

3. The apparatus as claimed in Claim 2, in which the first mould element comprises a platen-like member with the ribs formed thereon.

4. The apparatus as claimed in Claim 3, in which the platen-like member carries the heating means.

5. The apparatus as claimed in any one of the preceding claims, in which each cam member of the cam arrangement has a follower associated therewith, the cam member bearing against one end of the follower with an opposed end of the follower bearing against its associated rib of the second mould element.

6. The apparatus as claimed in Claim 5, in which each follower is in the form of a pin which is displaceably carried by the second mould element.

7. The apparatus as claimed in any one of the preceding claims in which the second mould element has a peripheral wall portion which abuts against the first mould element, in use, prior to displacement of the ribs of the second mould element to grip the batt and to effect stretching of the batt over the ribs of the first mould element.

8. The apparatus as claimed in any one of the preceding claims, which includes an ejector mechanism for ejecting a formed filter element from the first mould element.

9. The apparatus as claimed in Claim 8, in which the ejector mechanism comprises a plurality of ejector rods arranged in the first mould element.

10. The apparatus as claimed in any one of the preceding claims, in which the ribs of the first mould element are annular and have consecutively increasing diameters.

11. The apparatus as claimed in Claim 10, in which the ribs of the second mould element are correspondingly annular to mesh with the ribs of the first mould element, the ribs of the second mould element being defined by rings of consecutively increasing diameter.

12. The apparatus as claimed in Claim 11, in which the cam arrangement comprises two assemblies of cam members, the assemblies being mounted on opposed sides of a centre line of the first mould element and the second mould element with the assemblies being mirror images of each other.

13. The apparatus as claimed in Claim 12, in which the innermost cam member of each assembly has the longest dwell angle with the outermost cam member having the shortest dwell angle.

14. An apparatus for manufacturing a filter element, the apparatus including
a first mould element having a plurality of annular ribs of consecutively increasing diameter defined thereon;
a second mould element which is arranged in spaced alignment relative to the first mould element, the second mould element carrying a plurality of rings of consecutively increasing diameter displaceably thereon; and
a displacement means mounted on the second mould element for displacing the rings sequentially towards the first mould element such that, when the rings mesh with corresponding ribs of the first mould element, annular pleats or folds are formed in a sequential fashion in a batt of filter material arranged between the mould elements.
